(19) Europäisches Patentamt
European Patent Office
Office européen des brevets

(11) **EP 4 020 886 B1**

(12) **EUROPEAN PATENT SPECIFICATION**

(45) Date of publication and mention
of the grant of the patent:
**04.10.2023   Bulletin 2023/40**

(21) Application number: **21216471.9**

(22) Date of filing: **21.12.2021**

(51) International Patent Classification (IPC):
**G06F 21/55** (2013.01)          **G06F 21/57** (2013.01)
**H04L 9/40** (2022.01)

(52) Cooperative Patent Classification (CPC):
**H04L 63/1408; G06F 21/552; G06F 21/577;**
G06F 2221/2119

(54) **SYSTEM AND METHOD FOR DETECTING SUSPICIOUS WEBSITES IN PROXY'S DATA STREAMS**

SYSTEM UND VERFAHREN ZUR ERKENNUNG VERDÄCHTIGER WEBSITES IN
PROXY-DATENSTRÖMEN

SYSTÈME ET PROCÉDÉ PERMETTANT DE DÉTECTER DES SITES WEB SUSPECTS DANS LES
FLUX DE DONNÉES DE PROXY

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **23.12.2020   IL 27969720**

(43) Date of publication of application:
**29.06.2022   Bulletin 2022/26**

(73) Proprietor: **Deutsche Telekom AG
53113 Bonn (DE)**

(72) Inventors:
• **VAISMAN, Yizhak
  8436812 BeerSheva (IL)**
• **COHEN, Dvir
  7686019 Batya (IL)**
• **ELOVICI, Yuval
  7986400 Arugot (IL)**
• **SHABTAI, Asaf
  7684200 Hulda (IL)**
• **BRODT, Oleg
  8471621 Beer Sheva (IL)**
• **MIMRAN, David
  6215505 Tel Aviv (IL)**

(74) Representative: **Graf von Stosch
Patentanwaltsgesellschaft mbH
Prinzregentenstraße 22
80538 München (DE)**

(56) References cited:
**US-A1- 2018 063 168     US-A1- 2020 021 607
US-A1- 2021 126 938**

## Description

### Field of the Invention

The present invention relates to the field of cyber security. More particularly, the present invention relates to a system and method for detecting suspicious websites in proxy's data streams.

### Background of the Invention

Access to resources on the Internet is a basic capability and a tool used by users in most organizations. This exposes the end-users inside the organization to many threats and cyber-attacks that originated from the Internet. Users may access malicious and dangerous sites from the company's computer and network, usually unintentionally, by not being familiar with security risks or by being infected with malicious software, and can cause serious harm. In 2016, around 60 percent of businesses got trapped in a social engineering attack [4], most of those attacks happened when accessing malicious websites.

In order to mitigate this risk, organizations deploy network logs from an endpoint user station. This can help companies to detect such undesirable behavior to mitigate their damage. While many works have been spent in the field of network anomaly detection, only a few of them considered the true nature of the problem as a temporal sequence. Such works modeled the problem as a point-based anomaly detection problem [1], while losing the information hidden in the order of the sequence's elements.

Other works, [16, 15] did address the temporal nature of the data. They used stateof-the-art neural network models like Long Short-Term Memory (LSTMs), to learn an embedding representation of normal internet traffic. Given a sequence of tokens, the model tries to predict the next token, without knowing if the token is an anomaly or not. If the model poorly predicts a sequence of tokens, this sequence is regarded as an anomaly. However, the main challenge with this method is the high computational cost of searching for the right network architecture and learning the network's parameters.

It is therefore an object of the present invention to provide a system and method for detecting suspicious websites in proxy's data streams, for preventing users from accessing malicious and dangerous sites from a computer and network, which can cause serious harm.

It is another object of the present invention to provide a system and method for detecting anomalous sequences from an unlabeled dataset, which may contain normal and anomalous sequences.

It is a further object of the present invention to provide a system and method for detecting anomalous sequences from an unlabeled dataset, which considers the temporal characteristics of the data.

Other objects and advantages of the invention will become apparent as the description proceeds.

US 2018/063168 A1 discloses a method for classifying URLs as malicious through sequential modeling of datasets and automatically extracting the feature representations of proxy logs through machine learning.

### Summary of the Invention

The scope of the invention is defined by the independent claims.

### Brief Description of the Drawings

The above and other characteristics and advantages of the invention will be better understood through the following illustrative and non-limitative detailed description of preferred embodiments thereof, with reference to the appended drawings, wherein:

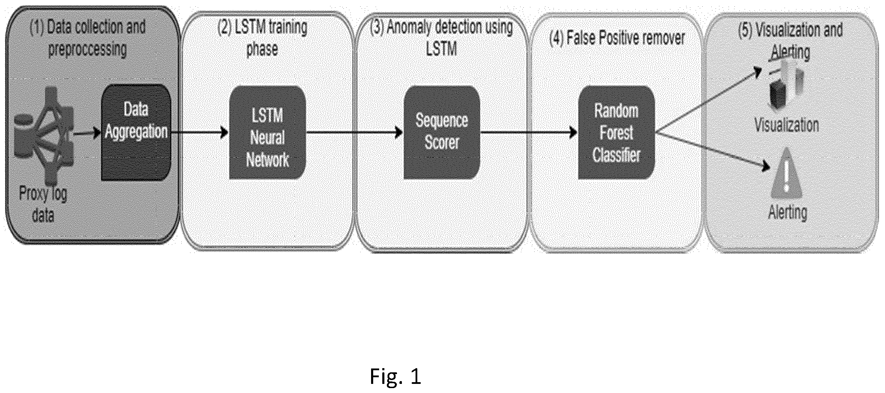

- Fig. 1 shows the present invention's system's framework;
- Fig. 2 shows an example of an HTTP request;
- Fig. 3 shows the top 20 websites percentage; and
- Fig. 4 shows the present invention's system's dashboard.

### Detailed Description of the Invention

The present invention provides a system and method for detecting suspicious websites in proxy's data streams. The method proposed by the present invention uses a Long-Short-Term-Model (LSTM), which is a type of neural network that is commonly used for time series data and natural language processing. The model's goal is to give each website's sequence an anomaly score. After the neural network models the transitions of all the sequences of websites in the dataset, it will be able to produce the probability of the transition from website A to website B. For example, given this sequence:

*google.com → stackoverflow.com → n543kn4j3.com* (1)

The model learned that "stackoverflow.com" has a high probability of appearing after "google.com", while "n543kn4j3.com" has an extremely low probability of appearing after "stackoverflow.com". If the multiplication of the probabilities of each website in the sequence loss score will be high, this sequence is labeled as an anomaly.

Following the discrete sequence anomaly detection formulation suggested by [2] the method proposed by the present invention belongs to the *sequence-based anomaly detection* category. This stipulates an entire sequence as anomalous if it is significantly different from normal sequences. Within this category, the method proposed by the present invention is the unsupervised anomaly detection variant, meaning that the aim is to detect anomalous sequences from an unlabeled dataset which may contain normal and anomalous sequences.

The method proposed by the present invention is most related to RNN's techniques applied for anomaly detection. These techniques learn the probability of observing each symbol of the sequence, and use them to obtain an anomaly score for the entire sequence. These techniques analyze each symbol with respect to previous symbols.

It was found useful to combine the Window-based approach, as presented in [8], as a complementary technique to the method proposed by the present invention. Window-based approaches split the sequence into multiple fixed-length windows of sub-sequences, calculate anomaly scores for all windows and aggregate them to obtain the entire sequence anomaly score. This method is useful for cases where the entire sequence is analyzed as a whole. The anomaly signal might not be distinguishable. For example, a user may have short sessions of anomalous network behavior during a given day, but the full sequence will be dominant by normal network behavior.

[13] tries to predict the next scientific paper a user will access using the Research-Index dataset. Similar to the data used by the present invention, the sequential data consist of the user accessed, the paper ID, and the time stamp. The authors of [13] extracted Bi-grams from the sequences and then clustered the data using the Bigrams as features. Then they used maximum entropy (maxent) to predict the next paper in the sequence. Because of the sparsity of the data, they were not able to predict among the entity of the data and had to predict only within a single cluster. In contrast, the method proposed by the present invention is not limited to a specific cluster and uses all the data.

## Network Traffic Anomaly Detection

Prior art methods discovered anomalies as training samples, and treat this as a supervised classification problem. Yin et al. [20] used the RNN network to create a classification model for detecting network attacks. However, is it hard to obtain a labeled dataset for training. Therefore the method proposed by the present invention focuses on the unsupervised anomaly detection task.

A recent approach to detect anomalies is to use encoder-decoder deep learning models. Those models learn a new latent representation of the data, typically referred to as embeddings (an embedding is a mapping of a discrete categorical variable to a vector of continuous numbers. In the context of neural networks, embeddings are low-dimensional, learned continuous vector representations of discrete variables. Neural network embeddings are useful because they can reduce the dimensionality of categorical variables and meaningfully represent categories in the transformed space), by forcing a compression of the data into a lower dimension space, and then using a decoder to learn to reconstruct the input data. After the model is converged, new inputs where the reconstruction did not succeed are regarded as anomalies. This method has been used for learning the latent representation of their data and then added a new supervised layer as a fine-tuning step [7]. However, these methods do not take into account the temporal characteristics of the data, as they do not look at the time or the order of the events.

The system proposed by the present invention includes the following modules:

**1) Data collection and pre-processing module** - the data collection and pre-processing module collects data to be used, which consists of proxy logs received by Symantec's Blue Coat (Blue Coat Advanced Web & Cloud Security is a protection tool against web and network-based threats, which enables cloud data protection, and provides flexible business policy control across enterprise and cloud, including web, social and mobile networks). Once the log data arrive at the system, it is collected, aggregated, and transformed into temporal website sequences of length *n,* where each sequence is from a specific user. In addition, very popular websites are removed.

**2) LSTM training module** - Each sequence, including the sequence's user ID, is fed to a neural network for a training phase. The goal of the neural network is to predict the next token (website) in the sequence.

**3) Anomaly detection module using LSTM** - After the model is trained and is able to predict the next token (website) correctly, all the sequences are being fed into the model once again. For every sequence, the model provides a "probability score" representing how probable the sequence is. In case the score is above a specific threshold *t,* the sequence is considered suspicious.

**4) False Positive remover** - In some cases, a benign website could appear in a malicious sequence. For that reason, a pre-trained classifier is used to classify each website as malicious or benign in order to filter the benign websites out. In case most of the suspicious websites of a user are classified as benign, the user is ignored.

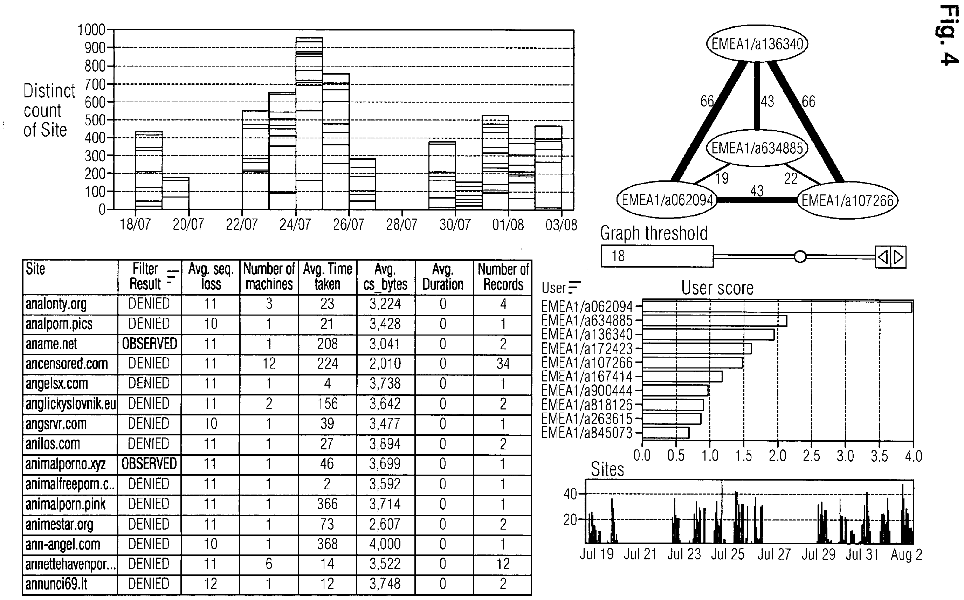

**5) Alerting module** - The system output alerts based on predefined alert-logic, this logic takes into account several features such as the number of suspicious websites of a user, the number of websites that were blocked by the proxy, and so on. In addition, the alerting module outputs a dashboard (shown in Fig. 4) for the visualization of the results, where an analyst can easily investigate the situations and extract meaningful insights.

## Data collection and pre-processing

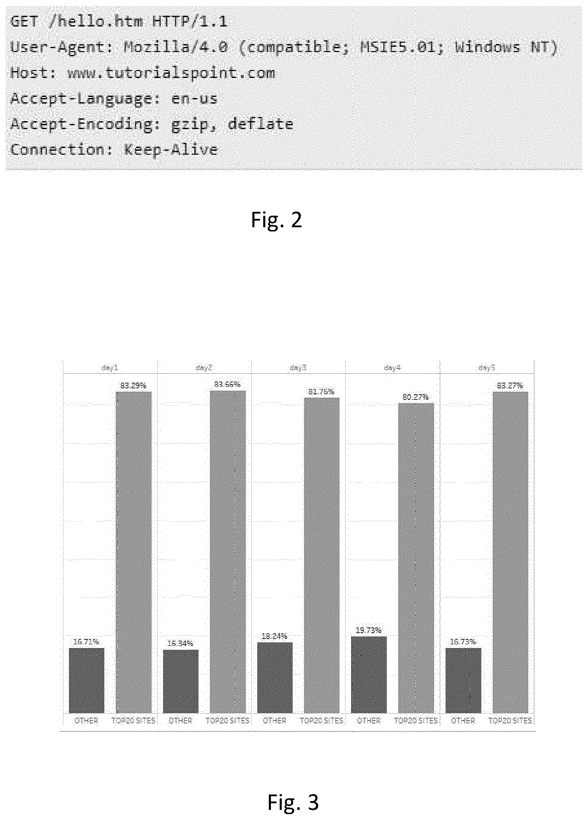

Proxy logs are HTTP/S traffic records that save every entry to a website as a record. Those logs consist of information like the URL, site category, client ID, source IP, destination IP, entry time, etc. Using HTTP/S request data (as shown in Fig. 2), one can extract the URL, user ID, user agent and URL path. Considering it and for making the algorithm used by the present invention suitable for any proxy server, the method proposed by the present invention uses only user ID and URL, while ignoring user agent and URL path. The main problem with using a URL path is that in the case of an HTTPS record the path is encrypted, thereby preventing from using this information. Since the number of proxy logs is extremely large (more than 50 million records a day), using the entirety of the data in a machine learning model is impractical without requiring expensive hardware. In addition, using every proxy log as an input to the model will add noise, as some of the logs are irrelevant for detecting anomalies, as used in Kusner et al [9]. Removing rare items from the data is a standard method for noise-reduction. For the same reason, the method proposed by the present invention removes rare websites that that appear only once (i.e., the websites with only one appearance in the logs).

Looking at the amount of websites entrances, it was found that the top 20 websites contain more than 80% (as shown in Fig. 3) of the total website entrances. By removing those websites, the number of logs was reduced from 51 million records to 10 million records in a single day. Reducing such an amount of records helps making the model more stable and helps running it much faster. The rationale is that the top websites like google.com, microsoft.com, live.com, etc. will not give any relevant information about the user anomaly.

Next, when a user enters a website, many logs of the same website can appear in a row. Because these repetitions add noise to the data, the method proposed by the present invention removes them and keeps only one log for each website entrance.

Then, because each day contains multiple different websites, the language model must be trained on the same websites it needs to predict. For that reason, the data was separated into days where the language model will be trained each day and predict the same day. The language model works with a fixed-sized sequence. Therefore, in order to prepare the data for the model, it was required to arrange the data as fixed-size sequences, where each sequence belongs to a specific user. In order to fill sequences smaller than the fixed-size padding [6] was used. For instance, if the fixed size is 16 and the current sequence size is 14; two empty strings were added to the sequence.

## Language models training phase

The learning process is based on deep learning language models. Therefore, given a user and a sub-sequence, the goal of the model is to predict the next website the user is going to access, i.e., given a temporal sequence, the model is required to predict the next item in the sequence. For example, given a sequence (shown in Table 2), the model will get the first site in the sequence and will try to predict the second site. Next, given the first two sites in the sequence, the model will try to predict the third site and so on. The LSTM model architecture is similar to ELMo architecture as presented by Peters et al [14]), as it fits the model goals.

Language models work with a fixed-size sequence as an input. Therefore, the best solution to relate to both users and websites is to get two different inputs, one is the users, and the second is the user website sequences. To handle the user input and to create an embedding representation for each user, the first layer was an embedding layer, which represents each user as an embedding vector, where similar users get similar vectors.

Next, a Dense layer (i.e., a fully connected layer) was used, which feeds all outputs from the embedding layer to all its neurons, each neuron providing one output to the next layer. The next model input was the websites sequences. Similar to the user's embedding representation, an embedding representation has been made to the websites using an embedding layer, the next layer is the dropout layer which is used to drop part of the LSTM weights.

Dropout is a regularization method where input and recurrent connections to LSTM units are probabilistically excluded from activation and weight updates while training a network. This has the effect of reducing overfitting and improving the model performance. The next step is to merge the outputs of the users and the website's models. Using the concatenate layer is the best option, which receives as input the two tensors and returns a single tensor, the concatenation of all inputs.

Lastly, two Dense layers with linear activation were used to simplify the model outputs and to adjust the model output to the model loss and optimizer functions. Using one day of proxy data, a language model is trained on the user and its websites sequences. During training, the model learns an embedding representation for the user and for its sequences.

## Anomaly detection using the language model

Most machine learning models use different sets for training and testing, as most of them are using labeled data for model training. This is because most of the models are trying to learn new things based on past data. For the testing phase, unlabeled data or labeled data was used for testing the model efficiently. On the other hand, the same set was used for both training and testing. The language model uses the same data as training and testing because it has been tried to detect abnormal sequences on unsupervised data. To detect anomalous users, the user's sequences are being run in the LSTM network and their loss is being calculated. Then, an anomalous sequence is being defined as the sequences that the loss of which is higher than the threshold.

## False Positive remover

Table 1. Sequence Example. Each cell represents a site, where malicious sites are marked in bold.

| iubenda.com | fbcdn.net | iubenda.com | fbcdn.net |
| archivioannamagnani.it | fbcdn.net | archivioannamagnani.it | corriereobjects.it |
| comodoca.com | actalis.it | leggo.it | ilfattoquotidiano.it |
| spietati.it | iltempo.it | ssi-images-amazon.com | mymovies.lt |
| 213.136.91.194 | hsjifeu.tk | letsencrypt.org | **big-prizes-4your1.com** |
| **yourmonday12.live** | **tdslsext1.com** | yourmonday12.live | letsencrypt.org |
| **yourmonday12.live** | **tdsjsext1.com** | **yourmonday12.live** | **tdsjsext1.com** |
| hsjifeu.tk | 213.136.91.194 | wurfl.io | hsjifeu.tk |

As can be seen from Table 1, each sequence can contain benign and malicious websites. These benign websites can be problematic because it is required to give each user a suspicious score. Using benign websites to calculate a user score will make the rating insufficient. Hence, a simple ML algorithm different from the language model is the optimal solution. In order to create a dataset for the classifier, several steps have been taken.

To use a supervised machine learning algorithm, labeled data must be provided. In order to create such a dataset, data from external sources was used. The external data sources that were used are Alexa[1], Umbrella[2] [18] and Pagerank[3], which contain the top 1 million most common websites by AMAZON, CISCO and Common Crawl, respectively. Those websites are considered benign. VirusTotal [17] provides an API that, by giving it a website URL, it can label the given website URL as malicious.

The free API is limited to a few hundred sites every day so it is impractical to label the entirety of the data. A website that is labeled as malicious in VirusTotal is considered doubtful. After the execution of those steps using external sources, most of the data remains unlabeled. In order to label those websites, each site was manually labeled in a single day result (a total of 923 websites). A website got a label of "suspicious" if this website can cause harm to the end-user, and increase the probability of infection. Those types of websites include small and rare pornographic sites, torrent downloads, browser games, etc. Those categories are based on Mahmoud et al [10], which presents the most suspicious categories by finding malicious URL's using a client honeypot.

The next step after labeling the data is feature extraction. Having the proxy logs it was decided to use data provided by the proxy. The data that was used to classify the website is described in Table 2 and WHOIS data provided by PyPi API (contains the website registrar, the website created date, website expired date). First, three different classifiers were created: SVM [11], Random Forest [12], and KNN [19]. After tuning each classifier hyper-parameters, the best classifier among those three was the Random Forest classifier. Considering the results, Random Forest is the classifier that has been chosen as the suspicious website classifier. Using Random Forest Feature importance on the Scikit-learn module (Scikit-learn is a free machine learning library for Python), WHOIS data was found to be meaningless, using an ML known method as feature selection [5] for model improving, only proxy data has been chosen to use as features to the classifier.

Finally, using the extracted data from the proxy and the external sources, a Random Forest model was created to remove benign websites from the LSTM output.

**Table 2.** The list of features used by the Random Forest classifier

| Feature | Description |
|---------|-------------|
| c2a average | Number of bytes sent from the client to the appliance. |
| a2c average | Number of bytes sent from the appliance to the client. |
| time taken | Time taken (in seconds) to process from the first client request received by the proxy. |
| time taken icap | The average time is taken (in milliseconds) to process the request from the first byte of client request data received by the proxy, to the last byte sent by the proxy to the client. This includes the delays caused by ICAP., |
| ent num | Number of entrances to the website, across all the suspicious sequences. |

**Alerting and Visualization**

Once having the LSTM output, classification for each website, and the proxy data, by using those data and Tableau as a visualization framework, one can visualize the anomalous users. As can be seen from Fig. 3, Tableau was used to create a dashboard showing suspicious users. In the dashboard, one can see for each day the suspicious users and suspicious websites. Each user is represented by a different color, and the greater the user severity score, the user square area is higher. In the right-left corner, one can see similar users that browsed the same suspicious websites. As the amount of similar websites grows, the edge between the users got thicker. One can also create a rule-based alert to synchronize with the company alert system and raise an alert when the user severity score is greater than a predetermined value.

To create a user severity score some additional information from the proxy logs was used. By using this information some variables were created and were defined. Let $T(user)$ be the amount of websites entrances per user, and let $S(user)$ be the number of suspicious websites the user browse, where $S \subseteq T$. Consequently, let $D(user)$ be the amount of denied websites the user browses to and let $O(user)$ be the websites the user browses to out of work time, where $O \subseteq S$ and $D \subseteq S$.

The working hours are defined as 6:00-20:00. In addition, let $Q(user)$ be the number of suspicious sequences the user has.

As a result, Let the Suspicious Ratio (SR) be defined as:

$$SR(user) = \frac{S(user)}{T(user)} \qquad (2)$$

The SR is used to calculate the ratio of suspicious websites entrances by a specific user out of all websites a user has browsed. Let the Denied Ratio (DR) be defined as:

$$DR(user) = \frac{D(user)}{S(user)} \qquad (3)$$

The DR is used to calculate the ratio of denied websites entrances by a specific user out of all suspicious websites a user has browsed. Let the Out Of Work Time Ratio be defined as:

$$OR(user) = \frac{O(user)}{S(user)} \qquad (4)$$

The OR is used to calculate the ratio of out-of-work time entrances by a specific user out of all suspicious websites a user has browsed to.

Next, the user's daily score will be calculated to measure the spaciousness of the user's behavior, using the previous equations. Let the user daily score be defined as:

$$Dscore(user) = \alpha(\min(-1 * \frac{DR(user)}{\log_{10}(SR(user))}, 1)) + \beta \ (\frac{Q(user) - \min(Q_i)}{\max(Q_i) - \min(Q_i)}) + \gamma(OR(user)) \ (5)$$

$$(5)$$

For the first section of the score equation, the value of the equation was normalized using log, because in most cases the SR score was much smaller compared to the DR score. In addition, in some cases, the score could be higher than 1 and the score is required to be between 0 and 1, so a minimum function was used between the calculated value and 1.

In the second section, minimum-maximum normalization was used to get a score between 0 and 1. The coefficient parameters $\alpha, \beta, \gamma$ were tuned to give the best results, the values that were used for the score calculation were 0.7,0.2,0.1 for $\alpha, \beta, \gamma$ respectively.

In order to improve the stability of the user score, the score's history of each user was used, in a decaying manner. The adapted score (*Tscore*) is the sum of the past 7 days *Dscore,* after a power-law decay is applied, where the exponent is the root of the number of days passed. A formal representation of this formula is presented as follows:

$$Tscore(user) = \sum_{j=currendate-7}^{currentdate} (Dscore_j(user)^{\sqrt{currentday-j+1}}) \qquad (6)$$

The data used in the present invention contains all the websites that Deutsche Telekom employees accessed over a period of 17 days. Only the domain name was taken without the path and the sub-domain name. All user names are anonymized to preserve users' privacy. There are 110,000 unique users and about 100,000 unique domain names. Multiple resolution descriptions of the data can be seen in table 3.

**The evaluation process contains two steps:**

**1. Detecting anomalous sequences:** Given a trained sequence model (as proposed in the model section), it will be fed with a sequence, and the likelihood the model predicts for the sequence is being observed. If this likelihood is lower than a particular threshold (it has experimented with multiple thresholds), then it will be considered as a suspicious sequence.

**2. Verifying that the anomalous sequences contain malicious websites:** Given a suspicious sequence, each of the websites will be labeled as malicious or not, using the following APIs:

a) Alexa list - which contains the top 1 million most common websites. Those websites are considered benign.
b) VirusTotal - provides an API that by giving it a website name it can label the website as malicious. Note that the API is limited to a few hundred sites every day.

A malicious sequence will be defined as containing at least one malicious website. The hypothesis behind this definition is that a benign user never enters a suspicious website.

All of the data is obviously cannot be labeled, because it is computationally heavy due to a limited number of API calls for VirusTotal and Alexa, so the websites in the sequences will be only checked if the present invention's model found them suspicious.

The main evaluation metric will be precision, meaning the number of malicious sequences out of the suspicious sequences produced by the temporal model. Precision is more important than recall in this task because in real-life situations, a human analyst will evaluate these suspicious sequences, and the goal is to provide this analyst with true malicious sequences and not waste the analyst's time on false positives.

Table 3. The average and maximum amount of instances (sites access in the data

|  | Maximum | Averaged |
|---|---|---|
| Day | 1 Billion | 800 Million |
| Hour | 120 Million | 33 Million |
| Minute | 2.1 Million | 550,000 |
| Second | 35,000 | 10,000 |

Important to note, the model proposed by the present invention may not find all the malicious sequences in the data (high recall), but is more concentrated to identify "true" malicious sequences.

For example, the following three sequences are considered:

**Sequence 1:** google.com, google.com, facebook.com, ynet.co.il, ynet.co.il
**Sequence 2:** google.com, google.com, facebook.com, ynet.co.il, Italiancookbook.it
**Sequence 3:** google.com, google.com, maliciouswebsite.cc, ynet.co.il, Italiancookbook.it

- A reasonable temporal model will probably find *sequence 1* as notsuspicious because all the websites are common websites and also match the same country (.com is pretty natural, and twice .co.il which is the same country). This will not affect the precision at all.
- A weak temporal model can find *sequence 2* as suspicious because it contains an Italian website (Italian cookbook.it) that followed an Israeli website (Ynet). The probability to go from the Italian website to the Israeli one is very low, and therefore this prediction will harm the precision.
- A reasonable temporal model can find *sequence 3* as suspicious because it contains a malicious website and also jumps between different country toplevel domains. In the evaluation metric used, this sequence will be considered as a true malicious sequence and increase the precision.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

**References**

1. Varun Chandola, Arindam Banerjee, and Vipin Kumar. Anomaly detection: A survey. ACM computing surveys (CSUR), 41(3):15, 2009.

2. Varun Chandola, Arindam Banerjee, and Vipin Kumar. Anomaly detection for discrete sequences: A survey. IEEE Transactions on Knowledge and Data Engineering, 24(5):823-839, 2010.

3. Ronan Collobert and Jason Weston. A unified architecture for natural language processing: Deep neural networks with multitask learning. In Proceedings of the 25th international conference on Machine learning, pages 160-167. ACM, 2008.

4. Gordon Darroch. New agari study reveals 60 percent of enterprises were victims of social engineering attacks in 2016. Agari, 2019.

5. Manoranjan Dash and Huan Liu. Feature selection for classification. Intelligent data analysis, 1(3):131-156, 1997.

6. Mahidhar Dwarampudi and NV Reddy. Effects of padding on lstms and cnns. arXiv preprint $\alpha$rXiv:1903.07288, 2019.

7. Fahimeh Farahnakian and Jukka Heikkonen. A deep auto-encoder based approach for intrusion detection system. In 2018 20th International Conference on Advanced Communication Technology (ICACT), pages 178-183. IEEE, 2018.

8. Stephanie Forrest, Steven A Hofmeyr, Anil Somayaji, and Thomas A Longstaff. A sense of self for unix processes. In Proceedings 1996 IEEE Symposium on Security and Privacy, pages 120-128. IEEE, 1996.

9. Matt Kusner, Yu Sun, Nicholas Kolkin, and Kilian Weinberger. From word embeddings to document distances. In International conference on machine learning, pages 957-966, 2015.

10. Justin Ma, Lawrence K Saul, Stefan Savage, and Geoffrey M Voelker. Beyond blacklists: learning to detect malicious web sites from suspicious urls. In Proceedings of the 15th ACM SIGKDD international conference on Knowledge discovery and data mining, pages 1245-1254, 2009.

11. Olvi Mangasarian. Generalized support vector machines. Technical report, 1998.

12. Mahesh Pal. Random forest classifier for remote sensing classification. International Journal of Remote Sensing, 26(1):217-222, 2005.

13. Dmitry Y Pavlov and David M Pennock. A maximum entropy approach to collaborative filtering in dynamic, sparse, high-dimensional domains. In Advances in neural information processing systems, pages 1465-1472, 2003.

14. Matthew E Peters, Mark Neumann, Mohit Iyyer, Matt Gardner, Christopher Clark, Kenton Lee, and Luke Zettlemoyer. Deep contextualized word representations. arXiv preprint arXiv:1802.05365, 2018.

15. Benjamin J Radford, Leonardo M Apolonio, Antonio J Trias, and Jim A Simpson. Network traffic anomaly detection using recurrent neural networks. arXiv preprint arXiv:1803.10769, 2018.

16. Benjamin J Radford, Bartley D Richardson, and Shawn E Davis. Sequence aggregation rules for anomaly detection in computer network traffic. arXiv preprint arXiv:1805.03735, 2018.

17. Virus Total. Virustotal-free online virus, malware and url scanner. Online:https://www. virustotal, com/en, 2012.

18. Cisco Umbrella. Umbrella popularity list, 2016.

19. Kilian Q Weinberger, John Blitzer, and Lawrence K Saul. Distance metric learning for large margin nearest neighbor classification. In Advances in neural information processing systems, pages 1473-1480, 2006.

20. Chuanlong Yin, Yuefei Zhu, Jinlong Fei, and Xinzheng He. A deep learning approach for intrusion detection using recurrent neural networks. Ieee Access, 5:21954-21961, 2017.

**Claims**

1. A computer-implemented system for detecting suspicious websites in proxy's data streams, comprising:

    a) a data collection and pre-processing module for:

        a.1) receiving data from proxy logs and transforming said data into temporal website sequences of fixed size, where each sequence is from a specific user;
        a.2) removing rare websites that appear only once;

    b) a training module being a neural network, for:

        b.1) receiving each said sequence and performing a training phase, during which each sequence corresponds to a user ID;
        b.2) generating a Long Short-Term Memory, LSTM, based language model for predicting the next website in said each sequence, said language model comprising the following layers in order: (i) a first embedding layer representing each user as an embedding vector; (ii) a dense layer; (iii) a second embedding layer proving embedding representation to the websites; (iv) a dropout layer that is used to drop part of LSTM weights; (v) a concatenate layer for merging output of the users and the website's models; and a plurality of dense layers for simplifying outputs of the model;

    c) an anomaly detection module for:

        c.1) receiving all the sequences and feeding said sequences into the trained model;
        c.2) for every sequence, providing, by said model, a probability score representing how probable the sequence is;
        c.3) classifying the sequence as suspicious if said score is above a specific threshold$_{[A1]}$; and

    d) an alerting module having an alert-logic for outputting alerts based on the number of suspicious websites of a user and the number of websites that were blocked by the proxy.

2. A system according to claim 1, further comprising a visualization module for outputting visualized results, to be analyzed by an analyst.

3. A system according to claim 1, further comprising a false Positive remover being a pre-trained classifier for:

    a) classifying each website as malicious or benign and filtering out the benign websites; and
    b) ignoring users for which the suspicious websites of a user are classified as benign.

4. A system according to claim 1, in which the anomaly detection module uses LSTM.

5. A system according to claim 1, in which the proxy logs represent every entry to a website being saved as records.

6. A system according to claim 5, in which the proxy logs consist of one or more of the following:

    - the URL;
    - website category;
    - client ID;
    - source IP;

- destination IP;
- entry time.

**7.** A system according to claim 1, in which, when multijple logs of the same website appear in a row in a proxy log, only one log is kept for each website entrance.

**8.** A system according to claim 1, in which the language model is trained on the same websites it predicts.

**9.** A system according to claim 1, in which the user's sequences are being run by the anomaly detection module in the LSTM network and their loss is being calculated and an anomalous sequence is defined as a sequence with a loss being higher than the threshold.

**10.** A system according to claim 3, in which the False Positive remover uses a supervised Machine Learning algorithm which performs the following steps:

a) providing labeled data regarding whether websites are benign or malicious;
b) performing feature extraction, based on extracted data from the proxy and from external sources; and
c) using a selected classifier for removing benign websites from the LSTM output.

**11.** A system according to claim 1, in which anomalous users are visualized by a dashboard showing suspicious users.

**12.** A system according to claim 1, in which the user severity score is created by:

a) defining a Suspicious Ratio (SR) being the ratio of suspicious websites entrances by a specific user out of all websites a user browsed:

$$SR(user) = \frac{S(user)}{T(user)}$$

where $T(user)$ is the amount of websites entrances per user, and $S(user)$ is the number of suspicious websites the user browse, where $S \subseteq T$;
b) defining a Denied Ratio (DR) being the ratio of denied websites entrances by a specific user out of all suspicious websites a user browsed, as:

$$DR(user) = \frac{D(user)}{S(user)}$$

*where D(user)* is the amount of denied websites the user browsed
c) Defining an Out Of Work Time Ratio being the ratio of out of work time entrances by a specific user out of all suspicious websites a user browsed, as:

$$OR(user) = \frac{O(user)}{S(user)}$$

where $O(user)$ is the websites the user browses to out of work time, where $O \subseteq S$ and $D \subseteq S$
d) calculating a user daily score as:

$$Dscore(user) = \alpha(\min(-1*\frac{DR(user)}{\log_{10}(SR(user))}, 1)) + \beta \; (\frac{Q(user) - \min(Q_i)}{\max(Q_i) - \min(Q_i)}) + \gamma(OR(user))$$

$$(5)$$

**Patentansprüche**

1. Ein computerimplementiertes System zum Erkennen verdächtiger Websites in Proxy-Datenströmen, das Folgendes umfasst:

   a) ein Datenerfassungs- und Vorverarbeitungsmodul zum:

   a.1) Empfang von Daten aus Proxy-Logs und Umwandlung dieser Daten in temporale Website-Sequenzen fester Größe, wobei jede Sequenz von einem bestimmten Nutzer stammt;
   a.2) Entfernen seltener Websites, die nur einmal erscheinen;

   b) ein Trainingsmodul, das ein neuronales Netzwerk ist, zum:

   b.1) Empfang jeder dieser Sequenzen und Durchführung einer Trainingsphase, in der jede Sequenz einer Benutzer-ID entspricht;
   b.2) Erzeugen eines auf langem Kurzzeitgedächtnis (LSTM) basierten Sprachmodells zur Vorhersage der nächsten Website in jeder Sequenz, wobei das Sprachmodell die folgenden Layer in dieser Reihenfolge umfasst: (i) eine erste Embedding Layer, die jeden Benutzer als einen Embedding-Vektor darstellt; (ii) eine Dense Layer; (iii) eine zweite Embedding Layer, die eine Embedding-Darstellung für die Websites nachweist; (iv) eine Dropout Layer, die verwendet wird, um einen Teil der LSTM-Gewichte auszulassen; (v) eine Verkettungslayer zum Zusammenführen des Outputs der Benutzer und der Website-Modelle; und eine Vielzahl von Dense Layers zum Vereinfachen der Outputs des Modells;

   c) ein Modul zur Aufdeckung von Anomalien zum:

   c.1) Empfang aller Sequenzen und Eingabe dieser Sequenzen in das trainierte Modell;
   c.2) für jede Sequenz Eingeben eines Wahrscheinlichkeitswerts mit Hilfe des Modells, der besagt wie wahrscheinlich die Sequenz ist;
   c.3) Klassifizieren der Sequenz als verdächtig, wenn der Wert über einem bestimmten Schwellenwert liegt; und

   d) ein Warnmodul mit einer Warnlogik zur Ausgabe von Warnungen auf der Grundlage der Anzahl verdächtiger Websites eines Benutzers und der Anzahl von Websites, die durch den Proxy blockiert wurden.

2. System nach Anspruch 1, das ferner ein Visualisierungsmodul zur Ausgabe von visualisierten Ergebnissen umfasst, die von einem Analytiker analysiert werden können.

3. System nach Anspruch 1, das ferner einen Falsch-Positiv-Entferner umfasst, bei dem es sich um einen vorab trainierten Klassifikator handelt zum:

   a) Klassifizieren jeder Website als bösartig oder gutartig und Herausfiltern der gutartigen Websites; und
   b) Ignorieren von Nutzern, bei denen die verdächtigen Websites eines Nutzers als gutartig klassifiziert werden.

4. System nach Anspruch 1, bei dem das Modul zur Erkennung von Anomalien ein LSTM verwendet.

5. System nach Anspruch 1, bei dem die Proxy-Logs jeden Eintrag auf einer Website darstellen, der in Form von Datensätzen gespeichert wird.

6. System nach Anspruch 5, bei dem die Proxy-Logs aus einem oder mehreren der folgenden Elemente bestehen:

   - die URL;
   - Website-Kategorie;
   - Kunden-ID;
   - Quell-IP;
   - Ziel-IP;
   - Erfassungszeit.

7. System nach Anspruch 1, bei dem, wenn mehrere Logs der gleichen Website in einer Reihe in einem Proxy-Log erscheinen, nur ein Log für jeden Website-Eingang beibehalten wird.

**8.** System nach Anspruch 1, bei dem das Sprachmodell auf denselben Websites trainiert wird, die es vorhersagt.

**9.** System nach Anspruch 1, bei dem die Benutzersequenzen von dem Modul zur Erkennung von Anomalien in dem LSTM-Netz durchlaufen werden und ihr Verlust berechnet wird und eine anomale Sequenz als eine Sequenz definiert wird, deren Verlust höher als der Schwellenwert ist.

**10.** System nach Anspruch 3, bei dem der Falsch-Positiv-Entferner einen überwachten Machine-Learning-Algorithmus verwendet, der die folgenden Schritte durchführt:

a) Bereitstellung von gekennzeichneten Daten darüber, ob Websites gutartig oder bösartig sind;
b) Durchführung einer Merkmalsextraktion auf der Grundlage von extrahierten Daten aus dem Proxy und aus externen Quellen; und
c) Verwendung eines ausgewählten Klassifikators zur Entfernung gutartiger Websites aus der LSTM-Ausgabe.

**11.** System nach Anspruch 1, bei dem anomale Benutzer durch ein Dashboard visualisiert werden, das verdächtige Benutzer anzeigt.

**12.** System nach Anspruch 1, bei dem der Severity-Wert eines Benutzers erstellt ist durch:

a) Bestimmen einer Suspicious Ratio (SR) als das Verhältnis der verdächtigen Websites, die ein bestimmter Nutzer aufruft, zu allen von ihm besuchten Websites:

$$SR(user) = \frac{S(user)}{T(user)}$$

wobei $T(user)$ die Anzahl der Webseitenaufrufe pro Benutzer und $S(user)$ die Anzahl der verdächtigen Webseiten ist, die der Benutzer besucht, wobei $S \subseteq T$;
b) Bestimmen einer Denied Ratio (DR) als das Verhältnis der verweigerten Zugriffe auf Websites durch einen bestimmten Nutzer zu allen verdächtigen Websites, die ein Nutzer besucht hat:

$$DR(user) = \frac{D(user)}{S(user)}$$

wobei $D(user)$ die Anzahl der abgelehnten Websites ist, die der Benutzer besucht hat
c) Bestimmen einer Out-Of-Work-Time-Ratio als das Verhältnis der Out-of-Work-Time-Aufrufe eines bestimmten Benutzers zu allen verdächtigen Websites, die er besucht hat:

$$OR(user) = \frac{O(user)}{S(user)}$$

wobei $O(user)$ die Websites bezeichnet, die der Benutzer außerhalb der Arbeitszeit aufruft, wobei $O \subseteq S$ und $D \subseteq S$
d) Berechnung einer täglichen Punktzahl eines Benutzers als:

$$Dscore(user) = \alpha(\min(-1*\frac{DR(user)}{\log_{10}(SR(user))}, 1)) + \beta \ (\frac{Q(user) - \min(Q_i)}{\max(Q_i) - \min(Q_i)}) + \gamma(OR(user))$$
$$(5)$$

**Revendications**

**1.** Système informatique intégré permettant de détecter des sites Web suspects dans les flux de données proxy, comprenant :

a) une collecte de données et un module de prétraitement pour :

a.1) la réception des données depuis les logs proxy et la transformation desdites données en séquences de site Web temporelles de taille fixe où chaque séquence est issue d'un utilisateur spécifique ;
a.2) le retrait des sites Web rares qui n'apparaissent qu'une seule fois ;

b) un module de formation qui est un réseau neural, pour :

b.1) la réception de chaque séquence et la réalisation d'une phase de formation, durant laquelle chaque séquence correspond à un ID utilisateur ;
b.2) la génération d'un modèle de langage basé mémoire longue à court terme (LSTM) pour prédire le prochain site Web dans chaque séquence, ledit modèle de langage comprenant les couches suivantes dans l'ordre : (i) une première couche d'intégration représentant chaque utilisateur sous forme de vecteur d'intégration ; (ii) une couche dense ; (iii) une seconde couche d'intégration prouvant la représentation de l'intégration dans les sites Web, (iv) une couche de régularisation qui est utilisée pour régulariser une partie des poids LSTM ; (v) une couche de concaténation pour fusionner la sortie des modèles utilisateurs et sites Web ; et une pluralité de couches denses pour simplifier les sorties du modèle ;

c) un module de détection des anomalies pour :

c.1) la réception de toutes les séquences et le chargement desdites séquences dans le modèle formé ;
c.2) pour chaque séquence, fournir, par ledit modèle, un score de probabilité représentant dans quelle mesure la séquence est probable ;
c.3) la classification de la séquence de suspecte si ledit score est supérieur à un seuil spécifique ; et

d) un module d'alerte possédant une logique-alerte pour l'émission d'alertes basées sur le nombre de sites Web suspects d'un utilisateur et sur le nombre de sites Web qui ont été bloqués par le proxy ;

2. Système selon la revendication 1 comprenant également un module de visualisation pour l'émission de résultats visualisés qui seront analysés par un analyste.

3. Système selon la revendication 1 comprenant également un suppresseur de faux positif qui est un classificateur préformé pour :

a) la classification de chaque site Web comme malin ou bénin et le filtrage des sites Web bénins ; et
b) l'ignorance des utilisateurs pour lesquels les sites Web suspects d'un utilisateur sont classés bénins.

4. Système selon la revendication 1, dans lequel le module de détection des anomalies utilise le LSTM.

5. Système selon la revendication 1, dans lequel les logs proxy représentent chaque entrée dans un site Web enregistré comme archive.

6. Système selon la revendication 5, dans lequel les logs proxy consistent en l'un ou plusieurs des suivants :

- l'URL ;
- catégorie de site Web ;
- ID client ;
- IP source ;
- IP destination ;
- heure d'entrée.

7. Système selon la revendication 1, dans lequel lorsque plusieurs logs du même site Web apparaissent alignés dans un log proxy, seul un log est conservé pour chaque entrée de site Web.

8. Système selon la revendication 1, dans lequel le modèle de langage est formé sur le site Web qu'il prédit.

9. Système selon la revendication 1, dans lequel les séquences de l'utilisateur sont gérées par le module de détection des anomalies dans le réseau LSTM et leur perte est calculée et une séquence anormale est définie comme une séquence avec une perte supérieure au seuil.

10. Système selon la revendication 3, dans lequel le suppresseur de faux positif utilise un algorithme d'apprentissage supervisé qui réalise les étapes suivantes :

   a) l'apport de données étiquetées concernant la bénignité ou la malignité des sites Web ;
   b) la réalisation d'extraction de paramètres, basée sur les données extraites depuis le proxy et les sources externes ; et
   c) l'utilisation d'un classificateur sélectionné pour retirer les sites Web bénins de la sortie LSTM.

11. Système selon la revendication 1, dans lequel les utilisateurs anormaux sont visualisés par un tableau de bord affichant les utilisateurs suspects.

12. Système selon la revendication 1, dans lequel le score de sévérité de l'utilisateur est créé par :

   a) la définition d'un taux suspect (SR) qui est le taux d'entrées de sites Web suspects par un utilisateur spécifique parmi tous les sites Web parcourus par l'utilisateur :

$$SR(user) = \frac{S(user)}{T(user)}$$

   où T(user) désigne la quantité d'entrées de sites Web par utilisateur et S(user) est le nombre de sites Web suspects parcourus par l'utilisateur, où $S \subseteq T$ ;
   b) la définition d'un taux de refus (DR) qui est le taux d'entrées de sites Web refusés par un utilisateur spécifique parmi tous les sites Web suspects parcourus par un utilisateur, soit :

$$DR(user) = \frac{D(user)}{S(user)}$$

   où D(user) désigne la quantité de sites Web refusés parcourus par l'utilisateur
   c) la définition d'un taux hors temps de travail qui est le taux des entrées hors temps de travail par un utilisateur spécifique parmi tous les sites Web parcourus par un utilisateur, soit :

$$OR(user) = \frac{O(user)}{S(user)}$$

   où O(user) désigne les sites Web parcourus par l'utilisateur en dehors des heures de travail, où $O \subseteq S$ et $D \subseteq S$
   d) le calcul du score quotidien de l'utilisateur, soit :

$$Dscore(user) = \alpha(\min(-1*\frac{DR(user)}{\log_{10}(SR(user))}, 1)) + \beta\ (\frac{Q(user) - \min(Q_i)}{\max(Q_i) - \min(Q_i)}) + \gamma(OR(user))$$

$$(5)$$

Fig. 1

```
GET /hello.htm HTTP/1.1
User-Agent: Mozilla/4.0 (compatible; MSIE5.01; Windows NT)
Host: www.tutorialspoint.com
Accept-Language: en-us
Accept-Encoding: gzip, deflate
Connection: Keep-Alive
```

Fig. 2

Fig. 3

Fig. 4

EP 4 020 886 B1

Distinct count of Site

Graph threshold

18

User score

Sites

| Site | Filter Result | Avg. seq. loss | Number of machines | Avg. Time taken | Avg. cs_bytes | Avg. Duration | Number of Records |
|---|---|---|---|---|---|---|---|
| analonty.org | DENIED | 11 | 3 | 23 | 3,224 | 0 | 4 |
| analporn.pics | DENIED | 10 | 1 | 21 | 3,428 | 0 | 1 |
| aname.net | OBSERVED | 11 | 1 | 208 | 3,041 | 0 | 2 |
| ancensored.com | DENIED | 11 | 12 | 224 | 2,010 | 0 | 34 |
| angelsx.com | DENIED | 11 | 1 | 4 | 3,738 | 0 | 1 |
| anglickyslovnik.eu | DENIED | 11 | 2 | 156 | 3,642 | 0 | 2 |
| angsrvr.com | DENIED | 10 | 1 | 39 | 3,477 | 0 | 1 |
| anilos.com | DENIED | 11 | 1 | 27 | 3,894 | 0 | 2 |
| animalporno.xyz | OBSERVED | 11 | 1 | 46 | 3,699 | 0 | 1 |
| animalfreeporn.c.. | DENIED | 11 | 1 | 2 | 3,592 | 0 | 1 |
| animalporn.pink | DENIED | 11 | 1 | 366 | 3,714 | 0 | 1 |
| animestar.org | DENIED | 11 | 1 | 73 | 2,607 | 0 | 2 |
| ann-angel.com | DENIED | 10 | 1 | 368 | 4,000 | 0 | 1 |
| annettehavenpor... | DENIED | 11 | 6 | 14 | 3,522 | 0 | 12 |
| annunci69.it | DENIED | 12 | 1 | 12 | 3,748 | 0 | 2 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018063168 A1

**Non-patent literature cited in the description**

- **VARUN CHANDOLA ; ARINDAM BANERJEE ; VIPIN KUMAR.** Anomaly detection: A survey. *ACM computing surveys (CSUR),* 2009, vol. 41 (3), 15
- **VARUN CHANDOLA ; ARINDAM BANERJEE ; VIPIN KUMAR.** Anomaly detection for discrete sequences: A survey. *IEEE Transactions on Knowledge and Data Engineering,* 2010, vol. 24 (5), 823-839
- A unified architecture for natural language processing: Deep neural networks with multitask learning. **RONAN COLLOBERT ; JASON WESTON.** Proceedings of the 25th international conference on Machine learning. ACM, 2008, 160-167
- **GORDON DARROCH.** New agari study reveals 60 percent of enterprises were victims of social engineering attacks in 2016. *Agari,* 2019
- **MANORANJAN DASH ; HUAN LIU.** Feature selection for classification. *Intelligent data analysis,* 1997, vol. 1 (3), 131-156
- **MAHIDHAR DWARAMPUDI ; NV REDDY.** Effects of padding on lstms and cnns. *arXiv:1903.07288,* 2019
- A deep auto-encoder based approach for intrusion detection system. **FAHIMEH FARAHNAKIAN ; JUKKA HEIKKONEN.** 2018 20th International Conference on Advanced Communication Technology (ICACT). IEEE, 2018, 178-183
- A sense of self for unix processes. **STEPHANIE FORREST ; STEVEN A HOFMEYR ; ANIL SOMAYAJI ; THOMAS A LONGSTAFF.** Proceedings 1996 IEEE Symposium on Security and Privacy. IEEE, 1996, 120-128
- **MATT KUSNER ; YU SUN ; NICHOLAS KOLKIN ; KILIAN WEINBERGER.** From word embeddings to document distances. *International conference on machine learning,* 2015, 957-966

- **JUSTIN MA ; LAWRENCE K SAUL ; STEFAN SAVAGE ; GEOFFREY M VOELKER.** Beyond blacklists: learning to detect malicious web sites from suspicious urls. *Proceedings of the 15th ACM SIGKDD international conference on Knowledge discovery and data mining,* 2009, 1245-1254
- **OLVI MANGASARIAN.** Generalized support vector machines. *Technical report,* 1998
- **MAHESH PAL.** Random forest classifier for remote sensing classification. *International Journal of Remote Sensing,* 2005, vol. 26 (1), 217-222
- **DMITRY Y PAVLOV ; DAVID M PENNOCK.** A maximum entropy approach to collaborative filtering in dynamic, sparse, high-dimensional domains. *Advances in neural information processing systems,* 2003, 1465-1472
- **MATTHEW E PETERS ; MARK NEUMANN ; MOHIT IYYER ; MATT GARDNER ; CHRISTOPHER CLARK ; KENTON LEE ; LUKE ZETTLEMOYER.** Deep contextualized word representations. *arXiv:1802.05365,* 2018
- **BENJAMIN J RADFORD ; LEONARDO M APOLONIO ; ANTONIO J TRIAS ; JIM A SIMPSON.** Network traffic anomaly detection using recurrent neural networks. *arXiv:1803.10769,* 2018
- **BENJAMIN J RADFORD ; BARTLEY D RICHARDSON ; SHAWN E DAVIS.** Sequence aggregation rules for anomaly detection in computer network traffic. *arXiv:1805.03735,* 2018
- *Virus Total,* 2012, https://www. virustotal, com/en
- Umbrella popularity list. *Cisco Umbrella,* 2016
- **KILIAN Q WEINBERGER ; JOHN BLITZER ; LAWRENCE K SAUL.** Distance metric learning for large margin nearest neighbor classification. *Advances in neural information processing systems,* 2006, 1473-1480
- **CHUANLONG YIN ; YUEFEI ZHU ; JINLONG FEI ; XINZHENG HE.** A deep learning approach for intrusion detection using recurrent neural networks. *Ieee Access,* 2017, vol. 5, 21954-21961